# EUROPÄISCHE PATENTSCHRIFT

(11) **EP 1 130 033 B1**
(45) Veröffentlichungstag und Bekanntmachung des Hinweises auf die Patenterteilung: **06.04.2005**
(21) Anmeldenummer: 01104620.8
(22) Anmeldetag: 23.02.2001
(51) Int. Cl.: C08B 11/20, C08B 17/06

(54) **Verfahren zur sauer katalysierten, hydrolytischen Depolymerisierung von Celluloseethern**
Process for acid catalyzed hydrolytic depolymerization of cellulose ethers
Procédé de dépolymérisation hydrolytique et catalysée de façon acide des éthers de la cellulose

(30) Priorität: 01.03.2000 DE 10009642
(43) Veröffentlichungstag der Anmeldung: 05.09.2001
(73) Patentinhaber: SE Tylose GmbH & Co.KG, 65203 Wiesbaden (DE)
(72) Erfinder: Becker, Winfried, Dr., 65817 Eppstein (DE); Hammes, Alf, Dr., 55252 Mainz-Kastel (DE)
(74) Vertreter: Plate, Jürgen, Dr.

(56) Entgegenhaltungen:
- WO-A-00/32637

## Beschreibung

Gegenstand der Erfindung ist ein Verfahren zur sauer katalysierten, hydrolytischen Depolymerisierung von Celluloseethern und anschließenden Abtrennung und gegebenenfalls Reinigung und Trocknung des depolymerisierten Celluloseethers ohne Wechsel der Apparatur.

Die Depolymerisierung von Celluloseethern zur gezielten Einstellung der gewünschten Lösungsviskosität des resultierenden Produktes in wässriger Lösung ist seit langem bekannt und kann auf mannigfaltige Art erreicht werden. Insbesondere der Abbau zu niedrigstviskosen Produkten hat dabei große Aufmerksamkeit erlangt, da diese Produkte unter anderem als Beschichtungsmaterial für Pharmawirkstoffe oder Saatgut, aber auch z. B. als Schutzkolloid in der Suspensionspolymerisation, vorteilhaft eingesetzt werden können. Als niedrigstviskose Produkte werden im folgenden Celluloseether bezeichnet, deren Höppler-Viskosität, gemessen 2,0 %ig (absolut trocken) in Wasser bei 20°C, nicht mehr als 50 mPas beträgt.

Die zum Abbau von Celluloseethem eingesetzten Verfahren umfassen neben der sauer katalysierten, hydrolytischen Spaltung der acetalischen Bindung u.a. den oxidativen Abbau sowie den Abbau durch energiereiche Strahlung oder Mikroorganismen/Enzyme.

Einfache hydrolytische Abbauverfahren mit anorganischen oder organischen Säuren werden z.B. in der US-A-1 679 943, der US-A-1 943 461, der EP-B-0 497 985 und der EP-A-0 210 917 beschrieben.

Der hydrolytische Abbau ist funktionsgruppenneutral und schonend und kann zur Produktion niedrigstviskoser Produkte eingesetzt werden. Befindet sich der abzubauende Celluloseether jedoch in größerer Verdünnung in wässrigem Medium, sind Ausbeuteverluste kaum zu vermeiden.

Je geringer der durchschnittliche Polymerisationsgrad des herzustellenden Produktes ist, desto größer ist die Gefahr der Auflösung oder partiellen Anlösung und Verklebung des Materials in wässriger Suspension. Aus diesem Grund sind gängige Verfahren, mit denen Celluloseether in wässriger Suspension von der wässrigen Phase getrennt werden können, wie z. B. Dekanter oder Filterpressen, insbesondere bei niedrigstviskosen Produkten, nur bedingt einsetzbar.

Aufgabe der vorliegenden Erfindung war daher die Entwicklung eines Verfahrens zur Depolymerisierung von Celluloseetheitn durch sauer katalysierten, hydrolytischen Abbau und anschließender Abtrennung und gegebenenfalls Reinigung und Trocknung des depolymerisierten Celluloseethers, das ohne Wechsel der Apparatur durchgeführt werden kann.

Gegenstand der Erfindung ist ein Verfahren zur sauer katalysierten, hydrolytischen Depolymerisierung von Celluloseethern mit anschließender Abtrennung und gegebenenfalls Reinigung und Trocknung der depolymerisierten Celluloseether ohne Wechsel des verwendeten Raumes, das dadurch gekennzeichnet ist, dass in einem aus säurefesten Materialien bestehenden, mit je einem durch ein Filterelement voneinander getrennten Ein- und Auslass versehenen, verschlossenen, druckfesten, beheizbaren, mit einem Rührwerk ausgestatteten Raum der zu depolymerisierende Celluloseether, welcher durch den Einlass eingebracht und vom Filterelement zurückgehalten wird, in Form eines sauren Slurries unter Rühren bei einer Temperatur oberhalb der Flocktemperatur des depolymerisierten Celluloseethers, gegebenenfalls unter Druck, depolymerisiert wird, sowie nach vollendeter Depolymerisation durch Einbringen von Lauge und gegebenenfalls Zuschlagsstoffen neutralisiert wird und anschließend durch Öffnen des Auslasses, unter Schwerkrafteinfluss und/oder gegebenenfalls durch Anlegen eines äußeren Druckes an den Raum, vom Filtrat, das durch das Filterelement nicht zurückgehalten wird, abgetrennt wird, sowie gegebenenfalls anschließend durch einmaliges oder mehrmaliges Aufbringen von Wasser oder eines Gemisches aus Wasser und einem oder mehreren organischen Suspensionsmitteln einer Temperatur oberhalb der Flocktemperatur des depolymerisierten Celluloseethers und anschließendes Ablassen des Wassers bzw. des Wasser/Suspensionsmittel-Gemisches gereinigt wird und anschließend gegebenenfalls durch Anlegen eines Vakuums an den Raum oder Durchleiten eines Gases durch den Raum getrocknet wird.

Unter einem Raum ist dabei z.B. ein Behälter, ein Gefäß, ein Reaktor oder eine Apparatur zu verstehen.

Im Prinzip sind auch Ausführungsformen des Raumes möglich, bei denen der Raum mit mehreren Ein- und Auslässen versehen ist, wobei die Einlässe und die Auslässe jeweils durch ein oder mehrere Filterelemente voneinander getrennt sind.

Insbesondere überraschend an dem Verfahren ist, dass das Filterelement trotz der zum Teil erheblichen Klebrigkeit des zum Teil angequollenen Celluloseethers nicht verstopft und eine effektive Abtrennung des depolymerisierten, geflockten Produktes vom wässrigen Reaktionsslurry möglich ist.

Beim sauren Slurry beträgt das Gewichtsteileverhältnis vom flüssigen Medium zum zu depolymerisierenden Celluloseether bevorzugt mindestens 2:1, besonders bevorzugt liegt es im Bereich 4:1 bis 10:1.

Die Temperatur des Slurries beträgt bevorzugt mindestens 50 °C, besonders bevorzugt mindestens 80 °C.

Als Slurries werden bevorzugt wässrige Slurries eingesetzt, d.h. bei dem flüssigen Medium der Slurries handelt es sich um Wasser.

Neben Wasser können auch Gemische aus Wasser und einem oder mehreren organischen Suspensionsmitteln als flüssige Medien für die Slurries verwendet werden. Bevorzugte organische Suspensionsmittel sind Aceton, t-Butanol oder Ether, wie z. B. Diethylether oder höhere Homologe, sowie Dimethoxyethan oder cyclische Ether.

Bevorzugt wird der saure Slurry hergestellt, indem das Wasser oder das Wasser/Suspensionsmittel-Gemisch mit einer Temperatur oberhalb der Flocktemperatur des zu depolymerisierenden Celluloseethers vorgelegt wird, danach der zu depolymerisierende Celluloseether durch den Einlass in den Raum eingetragen wird und anschließend Säure eingetragen wird, wobei die Menge der verwendeten Flüssigkeit so bemessen sein sollte, dass eine gute Durchmischung mittels Rühren möglich ist.

Der pH-Wert des sauren Slurries liegt bevorzugt im Bereich von 0,1 bis 5, besonders bevorzugt im Bereich von 1,5 bis 4 und insbesondere im Bereich zwischen 2 und 3,5.

Zur Einstellung des sauren pH-Wertes des Slurries eignen sich anorganische und/oder organische Säuren. Bevorzugte Säuren sind insbesondere Salzsäure, Schwefelsäure, Salpetersäure und Phosphorsäure sowie deren Gemische in beliebiger, sinnvoller Konzentration.

Je nach dem gewünschten Polymerisationsgrad des depolymerisierten Celluloseethers werden der pH-Wert des sauren Slurries und die Depolymerisationszeit aufeinander abgestimmt.

Die Depolymerisationszeit beträgt bevorzugt 1 Minute bis 10 Stunden, besonders bevorzugt zwischen 10 Minuten und 2 Stunden und insbesondere zwischen 10 und 60 Minuten.

Die Höppler-Viskosität des depolymerisierten Celluloseethers, gemessen 2,0 %ig (absolut trocken) in Wasser bei 20 °C, beträgt bevorzugt nicht mehr als 50 mPas, besonders bevorzugt nicht mehr als 20 mPas.

Bei der Neutralisation des Slurries wird dessen pH-Wert mit Lauge bevorzugt auf einen Wert von 6,5 bis 9, besonders bevorzugt 7 bis 8, eingestellt. Zur Neutralisation wird bevorzugt eine wässrige Lösung von Natriumhydroxid verwendet. Die Konzentration der Lauge liegt bevorzugt im Bereich zwischen 10 und 35 %.

Die Restfeuchte des ausgepressten, depolymerisierten Celluloseethers kann, je nach Veretherungsgrad, bis zu 90 % betragen, liegt jedoch im Regelfall unter 60 %.

Vorteilhafterweise schließt sich an die Abtrennung des Filtrates vom depolymerisierten Celluloseether eine Reinigung des Celluloseethers an, wobei einmalig oder mehrmalig Wasser oder ein Wasser/Suspensionsmittel-Gemisch auf den Celluloseether aufgebracht wird und anschließend abgelassen wird. Bevorzugte organische Suspensionsmittel sind Aceton, t-Butanol oder Ether, wie z. B. Diethylether oder höhere Homologe, sowie Dimethoxyethan oder cyclische Ether.

Weiterhin vorteilhaft ist die anschließende Trocknung des Celluloseethers durch Anlegen eines Vakuums an den Raum oder Durchleiten eines inerten Gases durch den Raum. Bevorzugte Gase zum Durchleiten sind Stickstoff, Luft oder überhitzter Wasserdampf.

Bei den zu depolymerisierenden Celluloseethern handelt es sich bevorzugt um Carboxymethylcellulose, Carboxymethylhydroxypropylcellulose, Methylcellulose, Methylhydroxyethylcellulose oder Methylhydroxypropylcellulose.

Bei dem Filterelement handelt es sich bevorzugt um eine Vorrichtung, welche undurchlässig ist für Teilchen, deren Durchmesser größer als 2 µm ist. Besonders bevorzugt sind Filterelemente, die undurchlässig sind für Teilchen mit einem Durchmesser größer als 5 µm.

Als Rührwerke bevorzugt werden solche, die höhenverstellbar und gegebenenfalls beheizbar sind. Die Geometrie des Rührwerkes ist unerheblich, solange eine effektive Durchmischung des Slurries sichergestellt wird und das Rührwerk gegebenenfalls in der Lage ist, den depolymerisierten Celluloseether aus dem Raum auszutragen.

Gegebenenfalls besitzt der Raum zusätzlich einen Drucklufteinlass, einen Druckluftauslass, einen Gaseinlass, einen Gasauslass, einen Vakuumanschluss, einen Feststoffaustrag für den depolymerisierten Celluloseether und/oder eine oder mehrere Dosiervorrichtungen.

Bei den mit dem sauren Slurry in Kontakt stehenden säureresistenten Materialien handelt es sich bevorzugt um Emaille oder säurefeste Metalllegierungen wie z. B. Hastelloy C, Tantal und/oder säurefeste Kunststoffe, wie z.B. Polypropylen.

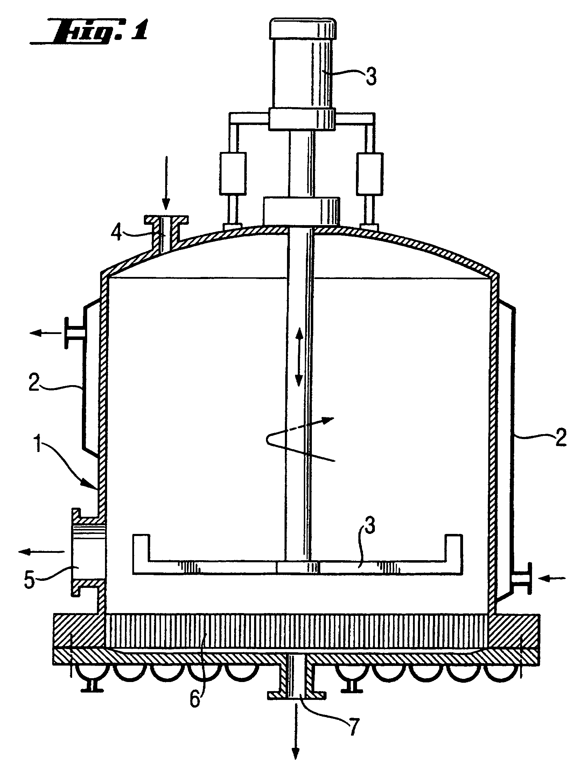

Besonders bevorzugt wird das Verfahren durchgeführt mit einer, wie in Figur 1 schematisch dargestellten, emaillierten Drucknutsche (1) oder einer vergleichbaren Apparatur, die mit einem Einlass (4), einem Auslass (7), einem Heizmantel (2), einem höhenverstellbaren Rührwerk (3), einem Feststoffaustrag (5) für den depolymerisierten Celluloseether und einem Filterboden (6) versehen ist. Alle nicht-emaillierten, mit dem sauren Slurry in Kontakt stehenden Teile, bestehen aus einem säureresistenten Material.

Gegenstand der vorliegenden Erfindung ist somit auch die Verwendung einer emaillierten Drucknutsche (1), die mit einem Einlass (4), einem Auslass (7), einem Heizmantel (2), einem Rührwerk (3), einem Feststoffaustrag (5) und einem Filterboden (6) versehen ist, bei der alle nicht-emaillierten Teile aus einem säureresistenten Material bestehen, zur Depolymerisierung von Celluloseethern.

## Patentansprüche

1. Verfahren zur sauer katalysierten, hydrolytischen Depolymerisierung von Celluloseethern mit anschließender Abtrennung und gegebenenfalls Reinigung und Trocknung der depolymerisierten Celluloseether ohne Wechsel des verwendeten Raumes, **dadurch gekennzeichnet, dass** in einem aus säurefesten Materialien bestehenden, mit je einem durch ein Filterelement voneinander getrennten Ein- und Auslass versehenen, verschlossenen, druckfesten, beheizbaren, mit einem Rührwerk ausgestatteten Raum der zu depolymerisierende Celluloseether, welcher durch den Einlass eingebracht und vom Filterelement zurückgehalten wird, in Form eines sauren Slurries unter Rühren bei einer Temperatur oberhalb der Flocktemperatur des depolymerisierten Celluloseethers, gegebenenfalls unter Druck, depolymerisiert wird, sowie nach vollendeter Depolymerisation durch Einbringen von Lauge und gegebenenfalls Zuschlagsstoffen neutralisiert wird und anschließend durch Öffnen des Auslasses, unter Schwerkrafteinfluss und/oder gegebenenfalls durch Anlegen eines äußeren Druckes an den Raum, vom Filtrat, das durch das Filterelement nicht zurückgehalten wird, abgetrennt wird, sowie gegebenenfalls anschließend durch einmaliges oder mehrmaliges Aufbringen von Wasser oder eines Gemisches aus Wasser und einem oder mehreren organischen Suspensionsmitteln einer Temperatur oberhalb der Flocktemperatur des depolymerisierten Celluloseethers und anschließendes Ablassen des Wassers bzw. des Wasser/Suspensionsmittel-Gemisches gereinigt wird und anschließend gegebenenfalls durch Anlegen eines Vakuums an den Raum oder Durchleiten eines Gases durch den Raum getrocknet wird.

2. Verfahren gemäß Anspruch 1, **dadurch gekennzeichnet, dass** beim Slurry das Gewichtsteileverhältnis vom flüssigen Medium zum zu depolymerisierenden Celluloseether mindestens 2:1 beträgt.

3. Verfahren gemäß Anspruch 1 oder 2, **dadurch gekennzeichnet, dass** die Temperatur des Slurries mindestens 50°C beträgt.

4. Verfahren gemäß mindestens einem der Ansprüche 1 bis 3, **dadurch gekennzeichnet, dass** es sich bei dem Slurry um einen wässrigen Slurry handelt.

5. Verfahren gemäß mindestens einem der Ansprüche 1 bis 3, **dadurch gekennzeichnet, dass** es sich beim flüssigen Medium des Slurries um ein Gemisch aus Wasser und einem oder mehreren organischen Suspensionsmitteln handelt.

6. Verfahren gemäß mindestens einem der Ansprüche 1 bis 5, **dadurch gekennzeichnet, dass** der saure Slurry hergestellt wird, indem Wasser oder ein Wasser/Suspensionsmittel-Gemisch mit einer Temperatur oberhalb der Flocktemperatur des zu depolymerisierenden Celluloseethers vorgelegt wird, danach der zu depolymerisierende Celluloseether eingetragen wird und anschließend eine Säure eingetragen wird.

7. Verfahren gemäß mindestens einem der Ansprüche 1 bis 6, **dadurch gekennzeichnet, dass** der pH-Wert des sauren Slurries 0,1 bis 5 beträgt.

8. Verfahren gemäß mindestens einem der Ansprüche 1 bis 7, **dadurch gekennzeichnet, dass** der pH-Wert des sauren Slurries und/oder die Depolymerisationszeit entsprechend dem gewünschten Polymerisationsgrad des depolymerisierten Celluloseethers aufeinander abgestimmt werden.

9. Verfahren gemäß mindestens einem der Ansprüche 1 bis 8, **dadurch gekennzeichnet, dass** die Depolymerisationszeit 1 Minute bis 10 Stunden beträgt.

10. Verfahren gemäß mindestens einem der Ansprüche 1 bis 9, **dadurch gekennzeichnet, dass** die Höppler-Viskosität des depolymerisierten Celluloseethers, gemessen 2,0 %ig (absolut trocken) in Wasser bei 20°C, nicht mehr als 50 mPas beträgt.

11. Verfahren gemäß mindestens einem der Ansprüche 1 bis 10, **dadurch gekennzeichnet, dass** der pH-Wert des neutralisierten Slurries 6,5 bis 9 beträgt.

12. Verfahren gemäß mindestens einem der Ansprüche 1 bis 11, **dadurch gekennzeichnet, dass** es sich bei dem zu depolymerisierenden Celluloseether um Carboxymethylcellulose, Carboxymethylhydroxypropylcellulose, Methylcellulose, Methylhydroxypropylcellulose oder Methylhydroxypropylcellulose handelt.

13. Verfahren gemäß mindestens einem der Ansprüche 1 bis 12, **dadurch gekennzeichnet, dass** das Filterelement undurchlässig ist für Teilchen mit einem Durchmesser größer als 2 µm.

14. Verfahren gemäß mindestens einem der Ansprüche 1 bis 13, **dadurch gekennzeichnet, dass** der Raum zusätzlich mit einem Drucklufteinlass, einem Druckluftauslass, einem Gaseinlass, einem Gasauslass, einem Vakuumanschluss, einem Feststoffaustrag und/oder einer oder mehreren Dosiervorrichtungen versehen ist.

15. Verfahren gemäß mindestens einem der Ansprüche 1 bis 14, **dadurch gekennzeichnet, dass** es sich bei den säureresistenten Materialien um Emaille, Kunststoffe, Metalle und/oder Metalllegierungen handelt.

16. Verfahren gemäß mindestens einem der Ansprüche 1 bis 15, **dadurch gekennzeichnet, dass** es sich bei dem verschließbaren Raum um eine emaillierte Drucknutsche (1) handelt, die mit einem Einlass (4), einem Auslass (7), einem Heizmantel (2), einem höhenverstellbaren Rührwerk (3), einem Feststoffaustrag für den depolymerisierten Celluloseether (5) und einem Filterboden (6) versehen ist, bei der alle nicht-emaillierten, mit dem sauren Slurry in Kontakt stehenden Teile, aus einem säureresistenten Material bestehen.

17. Verwendung einer emaillierten Drucknutsche (1), die mit einem Einlass (4), einem Auslass (7), einem Heizmantel (2), einem Rührwerk (3), einem Feststoffaustrag (5) und einem Filterboden (6) versehen ist, bei der alle nicht-emaillierten Teile aus einem säureresistenten Material bestehen, zur Depolymerisierung von Celluloseethern.

## Claims

1. A process for the acid-catalyzed, hydrolytic depolymerization of cellulose ethers with subsequent separation and, if necessary, purification and drying of the depolymerized cellulose ethers without changing the space used, which comprises, in a sealed, pressure-tight, heatable space consisting of acid-resistant materials, provided with an inlet and an outlet which are separated from one another by a filter element, and fitted with a stirrer, depolymerizing the cellulose ether to be depolymerized, which is introduced through the inlet and retained by the filter element, in the form of an acidic slurry with stirring at a temperature above the flocculation temperature of the depolymerized cellulose ether, if necessary under pressure, and, when the depolymerization is complete, neutralizing the cellulose ether by introducing caustic lye and, if desired, additives, and subsequently, by opening the outlet, under the effect of gravity and/or if desired by applying an external pressure to the space, separating off the cellulose ether from the filtrate, which is not retained by the filter element, and, if necessary, subsequently purifying the cellulose ether by introducing water or a mixture of water and one or more organic suspension media one or more times at a temperature above the flocculation temperature of the depolymerized cellulose ether and subsequently releasing the water or water/suspension medium mixture, and subsequently, if necessary, drying the cellulose ether by applying a vacuum to the space or passing a gas through the space.

2. The process as claimed in claim 1, wherein, in the slurry, the weight ratio between the liquid medium and the cellulose ether to be depolymerized is at least 2:1.

3. The process as claimed in claim 1 or 2, wherein the temperature of the slurry is at least 50°C.

4. The process as claimed in at least one of claims 1 to 3, wherein the slurry is an aqueous slurry.

5. The process as claimed in at least one of claims 1 to 3, wherein the liquid medium of the slurry is a mixture of water and one or more organic suspension media.

6. The process as claimed in at least one of claims 1 to 5, wherein the acidic slurry is prepared by initially introducing water or a water/suspension medium mixture at a temperature above the flocculation temperature of the cellulose ether to be depolymerized, then introducing the cellulose ether to be depolymerized, and subsequently introducing an acid.

7. The process as claimed in at least one of claims 1 to 6, wherein the pH of the acidic slurry is from 0.1 to 5.

8. The process as claimed in at least one of claims 1 to 7, wherein the pH of the acidic slurry and/or the depolymerization time are matched to one another in accordance with the desired degree of polymerization of the depolymerized cellulose ether.

9. The process as claimed in at least one of claims 1 to 8, wherein the depolymerization time is from 1 minute to 10 hours.

10. The process as claimed in at least one of claims 1 to 9, wherein the Höppler viscosity of the depolymerized cellulose ether, measured in 2.0% (absolutely dry) solution in water at 20°C, is not greater than 50 mPas.

11. The process as claimed in at least one of claims 1 to 10, wherein the pH of the neutralized slurry is from 6.5 to 9.

12. The process as claimed in at least one of claims 1 to 11, wherein the cellulose ether to be depolymerized is carboxymethylcellulose, carboxymethylhydroxypropylcellulose, methylcellulose, methylhydroxypropylcellulose or methylhydroxypropylcellulose.

13. The process as claimed in at least one of claims 1 to 12, wherein the filter element is impermeable to particles having a diameter greater than 2 µm.

14. The process as claimed in at least one of claims 1 to 13, wherein the space is additionally provided with a compressed-air inlet, a compressed-air outlet, a gas inlet, a gas outlet, a vacuum connection, a solids discharge and/or one or more metering devices.

15. The process as claimed in at least one of claims 1 to 14, wherein the acid-resistant materials are enamels, plastics, metals and/or metal alloys.

16. The process as claimed in at least one of claims 1 to 15, wherein the sealable space is an enameled pressure filter (1) which is provided with an inlet (4), an outlet (7), a heating jacket (2), a height-adjustable stirrer (3), a solids discharge for the depolymerized cellulose ether (5) and a filter base (6), in which all non-enameled parts in contact with the acidic slurry consist of an acid-resistant material.

17. The use of an enameled pressure filter (1) which is provided with an inlet (4), an outlet (7), a heating jacket (2), a stirrer (3), a solids discharge (5) and a filter base (6), in which all non-enameled parts consist of an acid-resistant material, for the depolymerization of cellulose ethers.

## Revendications

1. Procédé de dépolymérisation hydrolytique par catalyse acide d'éthers de cellulose suivi d'une séparation et éventuellement d'une purification et d'un séchage des éthers de cellulose dépolymérisés sans changement de la chambre de réaction utilisée, **caractérisé en ce que**, dans une chambre de réaction fermée, résistante à la pression, pouvant être chauffée, composée de matériaux résistants aux acides, pourvue d'une entrée et d'une sortie séparées l'une de l'autre par un élément filtrant et équipée d'un agitateur, on dépolymérise l'éther de cellulose à dépolymériser, lequel est introduit par l'entrée et retenu par l'élément filtrant, sous la forme d'une suspension acide, sous agitation à une température supérieure à la température de floculation de l'éther de cellulose dépolymérisé, éventuellement sous pression, et **en ce qu'**une fois la dépolymérisation achevée, on le neutralise en ajoutant une lessive alcaline et éventuellement des adjuvants, et **en ce qu'**on le sépare ensuite du filtrat qui n'est pas retenu par l'élément filtrant en ouvrant la sortie, sous l'effet de la gravité et/ou éventuellement en appliquant une pression externe dans la chambre de réaction, et **en ce qu'**on le purifie ensuite éventuellement en ajoutant une ou plusieurs fois de l'eau ou un mélange composé d'eau et d'un ou de plusieurs agents de suspension organiques ayant une température supérieure à la température de floculation de l'éther de cellulose dépolymérisé et en évacuant ensuite l'eau ou le mélange eau/agent de suspension, et **en ce qu'**on le sèche ensuite éventuellement en appliquant un vide dans la chambre de réaction ou en faisant circuler un gaz à travers la chambre de réaction.

2. Procédé selon la revendication 1, **caractérisé en ce que** dans la suspension, le rapport des parties en poids du milieu liquide à l'éther de cellulose à dépolymériser est d'au moins à 2:1.

3. Procédé selon la revendication 1 ou 2, **caractérisé en ce que** la température de la suspension est d'au moins 50°C.

4. Procédé selon au moins l'une des revendications 1 à 3, **caractérisé en ce que** la suspension est une suspension aqueuse.

5. Procédé selon au moins l'une des revendications 1 à 3, **caractérisé en ce que** le milieu liquide de la suspension est un mélange d'eau et d'un ou de plusieurs agents de suspension organiques.

6. Procédé selon au moins l'une des revendications 1 à 5, **caractérisé en ce que** l'on prépare la suspension acide en introduisant d'abord de l'eau ou un mélange eau/agent de suspension ayant une température supérieure à la température de floculation de l'éther de cellulose à dépolymériser puis en ajoutant l'éther de cellulose à dépolymériser et enfin en ajoutant un acide.

7. Procédé selon au moins l'une des revendications 1 à 6, **caractérisé en ce que** le pH de la suspension acide va de 0,1 à 5.

8. Procédé selon au moins l'une des revendications 1 à 7, **caractérisé en ce que** l'on ajuste le pH de la suspension acide et/ou le temps de dépolymérisation en fonction du degré de polymérisation souhaité de l'éther de cellulose dépolymérisé.

9. Procédé selon au moins l'une des revendications 1 à 8, **caractérisé en ce que** le temps de dépolymérisation va de 1 minute à 10 heures.

10. Procédé selon au moins l'une des revendications 1 à 9, **caractérisé en ce que** la viscosité de Höppler de l'éther de cellulose dépolymérisé, mesurée à 2,0% (sur substance anhydre) dans de l'eau à 20°C, ne dépasse pas 50 mPa.s.

11. Procédé selon au moins l'une des revendications 1 à 10, **caractérisé en ce que** le pH de la suspension neutralisée va de 6,5 à 9.

12. Procédé selon au moins l'une des revendications 1 à 11, **caractérisé en ce que** l'éther de cellulose à dépolymériser est la carboxyméthylcellulose, la carboxyméthylhydroxypropylcellulose, la méthylcellulose, la méthylhydroxypropylcellulose ou la méthylhydroxypropylcellulose.

13. Procédé selon au moins l'une des revendications 1 à 12, **caractérisé en ce que** l'élément filtrant retient les particules d'un diamètre supérieur à 2 µm.

14. Procédé selon au moins l'une des revendications 1 à 13, **caractérisé en ce que** la chambre de réaction est pourvue en outre d'une entrée d'air comprimé, d'une sortie d'air comprimé, d'une entrée de gaz, d'une sortie de gaz, d'un raccord de vide, d'une sortie de matières solides et/ou d'un ou de plusieurs dispositifs de dosage.

15. Procédé selon au moins l'une des revendications 1 à 14, **caractérisé en ce que** les matériaux résistants aux acides sont des émaux, des matières plastiques, des métaux et/ou des alliages métalliques.

16. Procédé selon au moins l'une des revendications 1 à 15, **caractérisé en ce que** la chambre de réaction pouvant être fermée est un filtre à pression émaillé (1) pourvu d'une entrée (4), d'une sortie (7), d'une enveloppe chauffante (2), d'un agitateur réglable en hauteur (3), d'une sortie de matières solides (5) pour l'éther de cellulose dépolymérisé et d'un fond filtrant (6), dans lequel tous les éléments non émaillés en contact avec la suspension acide sont faits d'un matériau résistant aux acides.

17. Utilisation, pour la dépolymérisation d'éthers de cellulose, d'un filtre à pression émaillé (1) pourvu d'une entrée (4), d'une sortie (7), d'une enveloppe chauffante (2), d'un agitateur (3), d'une sortie de matières solides (5) et d'un fond filtrant (6), dans lequel tous les éléments non émaillés sont fait d'un matériau résistant aux acides.
